# EUROPÄISCHE PATENTANMELDUNG

(11) **EP 4 202 140 A1**
(43) Veröffentlichungstag der Anmeldung: **28.06.2023**
(21) Anmeldenummer: 22211897.8
(22) Anmeldetag: 07.12.2022
(51) Int. Cl.: E04B 1/80, E04B 1/94

(54) **VAKUUMISOLATIONSELEMENT**

(30) Priorität: 23.12.2021 DE 202021107040 U
(71) Anmelder: va-Q-tec AG, 97080 Würzburg (DE)
(72) Erfinder: Bock, Tobias, 97318 Kitzingen (DE); Gralla, Sebastian, 97070 Würzburg (DE); Rottenbacher, Kenny, 97082 Würzburg (DE); Kuhn, Joachim, 97074 Würzburg (DE)
(74) Vertreter: Gleim, Christian Ragnar

(57) **Zusammenfassung**

Vakuumisolationselement 1, geeignet als Brandschutzisolationselement, umfassend ein Kernmaterial 2, und eine das Kernmaterial 2 vollständig umgebende Hülle 3, welche Hülle 3 eine Kunststofflage 3a und eine an der Kunststofflage 3a angeordnete Edelstahllage 3b umfasst.

## Beschreibung

Die Erfindung betrifft ein Vakuumisolationselement, geeignet als Brandschutzisolationselement, gemäß dem unabhängigen Anspruch.

Bei konventionellen Vakuumisolationselementen, welche oft als Vakuumisolationspaneel ausgebildet sind, wird ein druckstabiles Kernmaterial, zum Beispiel aus pyrogener Kieselsäure, mit einer vakuumdichten Hülle umhüllt. Als Hülle wird meist eine mehrlagige, metallisierte Kunststofffolie verwendet, welche als Hochbarrierefolie ausgebildet ist. Das Kernmaterial wird in die Hülle eingebracht, woraufhin die Hülle evakuiert und vakuumdicht versiegelt wird. Solch ein Vakuumisolationselement zeigt aufgrund des darin erzeugten Vakuums im Vergleich zu anderen Isolierplattenwerkstoffen hervorragende thermische Isoliereigenschaften. Insbesondere trägt die durch Evakuierung reduzierte Konvektion innerhalb des Vakuumisolationselements zu den besseren thermischen Isoliereigenschaften bei.

Derartige Vakuumisolationselemente kommen in unterschiedlichen technischen Anwendungen zum Einsatz, wie zum Beispiel als thermische Isolierelemente in Transportcontainern oder -boxen für den temperaturgeführten Transport oder im Bereich von Baumaterialien, zum Beispiel zur Wärmedämmung von Decken und Wänden. Im Vergleich zu vielen anderen Isolierelementen nehmen Vakuumisolationselemente für die gleiche thermische Isolierleistung oft deutlich weniger Raum in Anspruch.

Oft werden bei den Anwendungen der Vakuumisolationselemente besondere Anforderungen an präventive Brandschutzeigenschaften des Vakuumisolationselements gestellt, wie zum Beispiel bei Batterieisolierungen, Dämmstoffen im Bahn- und Flugverkehr, etc.

Im Gebäudebereich sind diese sind in Form von Bauststoffklassen definiert.

Gängige Vakuumisolationselemente erfüllen typischerweise nicht die nach DIN 4102-1 an die Baustoffklasse B2 oder nach EN 13501-1 an die Euroklasse E gestellten Anforderungen. Dies liegt vor allem daran, dass die Hülle der bei den beschriebenen Vakuumisolationselementen aus einfach brennbaren, mehrschichtigen metallisierten Kunststoff besteht. Diese kommt jedoch deshalb gängiger Weise zum Einsatz, da diese eine niedrige Permeationsrate zur langen Aufrechterhaltung eines Vakuums aufweist, und zudem leicht durch thermisches Verschweißen mit Nähten versiegelbar ist. Durch brandhemmende Substanzen auf der Hülle kann die Brandschutzklasse erhöht werden, jedoch erfüllen Vakuumisolationselemente selbst mit nicht-brennbaren Kernmaterial typischerweise nicht die nach DIN 4102-1 oder EN 13501-1 gestellten Anforderungen an die Brandschutzklasse A2.

Weiterhin ist zum Beispiel aus der WO 9601346 A1 bekannt, ein Vakuumisolationspaneel mit einer Edelstahlumhüllung zu versehen. Dabei wird ein Oberteil und ein Unterteil aus Edelstahl miteinander verschweißt, um den Zwischenraum hermetisch abzuschließen. Im Kern dieses Vakuumisolationspaneels sind mehrere Lagen aus Glasfasermatten angeordnet.

Eine ähnliche Technik offenbart die WO 2018 043712 A1, wobei ein Vakuumisolationspaneel mit einer Stahlumhüllung bereitgestellt wird. Auch hier besteht das Kernmaterial aus einem Fasermaterial.

Bei diesen Vakuumisolationspaneelen ist zwar die Nicht-Brennbarkeit gegeben, jedoch sind diese in der Herstellung aufwendig. Zudem ist auch die hohe Wärmeleitfähigkeit der reinen Edelstahlumhüllung nachteilig.

Es ist die Aufgabe der vorliegenden Erfindung die Nachteile aus dem Stand der Technik zu beseitigen und ein Vakuumisolationselement mit verbesserten Brandschutzeigenschaften zur Verwendung als Brandschutzisolationselement, bereitzustellen. Diese Aufgabe wird durch ein Vakuumisolationselement gemäß dem unabhängigen Anspruch gelöst. Vorteilhafte Aspekte bilden den Gegenstand der jeweiligen Unteransprüche.

Die Erfindung umfasst ein Vakuumisolationselement, geeignet als Brandschutzisolationselement, umfassend ein Kernmaterial, und eine das Kernmaterial vollständig umgebende Hülle, wobei die Hülle eine Kunststofflage und eine an der Kunststofflage angeordnete Edelstahllage umfasst.

Dabei kann das Kernmaterial pyrogene Kieselsäure und/oder ein Fasermaterial umfassen. Die Kombination aus Kunststofflage und Edelstahllage für die Ausbildung der Hülle bewirkt, dass das Vakuumisolationselement als Brandschutzisolationselement geeignet ist. Zudem reduziert die Kombination aus Kunststofflage und Edelstahllage das Auftreten von Wärmebrücken zwischen der Umgebung des Vakuumisolationselements und dem Kernmaterial und an den Nähten der Hülle.

Nach einem vorteilhaften Aspekt umfasst die Edelstahllage eine Edelstahlfolie. Dabei ist die Edelstahlfolie mit der Kunststofflage beschichtet. Edelstahlfolien stehen in geeigneten Dicken zur Verfügung und lassen sich einfach mit einer Kunststofflage, beispielsweise mit Polyethylen, beschichten. Die Ausbildung der Edelstahllage als Edelstahlfolie ist vorteilhaft gegenüber einer Metallisierung der Kunststofflage, da die Edelstahlfolie gegenüber der metallisierten Kunststofflage weniger empfindlich gegenüber mechanischer Belastung ist.

Nach einem weiteren vorteilhaften Aspekt umfasst die Edelstahllage eine Edelstahlfolie, und die Kunststofflage umfasst eine Kunststofffolie. Dabei ist die Edelstahlfolie auf die Kunststofffolie mittelbar oder unmittelbar aufkaschiert. Das Aufkaschieren bietet dabei eine kostengünstige und schnelle Verbundtechnik. Dabei können die Edelstahlfolie und die Kunststofffolie durch Klebstoff oder durch Thermokaschieren verbunden werden.

Nach einem bevorzugten Aspekt weist die Hülle eine Dicke auf, die derart ausgebildet ist, sodass die Hülle flexibel ist. Eine flexible Hülle bietet den Vorteil, dass Faltkanten gebildet werden können.

Nach einem besonders vorteilhaften Aspekt weist die Edelstahllage eine Dicke in einem Bereich zwischen 20 µm bis 80 µm, insbesondere 30 µm und 40 µm auf. Dies hat den Vorteil, dass das Vakuumisolationselement nicht zu steif wird. Es erlaubt dadurch eine flexiblere Handhabung.

Nach einem weiteren bevorzugten Aspekt hat die Edelstahllage eine geringere Dicke als die Kunststofflage. Dadurch kann ein geringes Gewicht der Hülle erzielt werden.

Nach einem bevorzugten Aspekt weist die Kunststofflage eine Dicke in einem Bereich zwischen 50 µm und 100 µm auf. Die Kunststofflage kann dabei als Hochbarrierelage derart ausgebildet sein, sodass die Kunststofflage trotz der geringen Dicke eine niedrige Permeationsrate aufweist, die geeignet ist, sodass im Inneren des Vakuumisolationselements ein Druck von < 1 mbar erzeugt und gehalten werden kann.

Nach einem weiteren bevorzugten Aspekt ist die Kunststofflage aus einem heißsiegelbaren Material. Dies ermöglicht die Bildung von Nähten durch thermisches Verschweißen der Kunststofflage. Eine andere Möglichkeit wäre ein ultraschallschweißbares Material.

Nach einem besonders bevorzugten Aspekt weist die Hülle zumindest eine durch thermisches Verschweißen der Kunststofflage mit der Edelstahllage gebildete Naht auf. Dadurch, dass die Hülle eine Kombination aus einer Kunststofflage und einer an der Kunststofflage angeordneten Edelstahllage ist, lässt sich thermisches Verschweißen zur Nahtbildung einfach durchführen.

Nach einem weiteren bevorzugten Aspekt weist die Hülle eine Permeationsrate für Luft in einem Bereich zwischen 0 - 2 mbarl/m²y @ Raumbedingungen und für Wasserdampf im Bereich von 0 - 0,004 g/m²d @ 50 °C, 70% r.H.

Nach einem besonders bevorzugten Aspekt umfasst das Vakuumisolationselement ein brennbares Kernmaterial. Dabei ist die Hülle derart ausgebildet ist, sodass das Vakuumisolationselement die Minimalanforderungen an die Brandklasse B2 gemäß DIN 4102-1 oder E nach EN 13501-1 aufweist. Dabei ist die Edelstahllage der Hülle derart ausgebildet, um ein Brennen des Kernmaterials zu verhindern.

Nach einem vorteilhaften Aspekt umfasst das Vakuumisolationselement ein nicht-brennbares Kernmaterial. Dabei ist die Hülle derart ausgebildet, sodass das Vakuumisolationselement die Minimalanforderungen an die Brandklasse A2 gemäß DIN 4102-1 oder EN 13501-1 aufweist.

Nach einem besonders vorteilhaften Aspekt umfasst das Kernmaterial einen festen Kern oder einen pulverförmigen Kern oder einen offenporigen Kern. Ein offenporiger Kern kann dabei pyrogene Kieselsäure umfassen. Ein fester Kern kann dabei ein Fasermaterial umfassen.

Nach einem bevorzugten Aspekt umfasst das Kernmaterial Glasfasern. Glasfasern und andere Fasermaterialien können dabei die Stabilität des Vakuumisolationselements erhöhen. Eine Variante für das Kernmaterial aus Kunststoff ist loses oder gepreßtes Kunststoffpulver und geschäumter Kunststoff.

Im Nachfolgenden wird die Erfindung anhand von Figuren beschrieben. Es zeigen:
Fig. 1 eine schematische Ansicht eines Vakuumisolationselements; und
Fig. 2 eine schematische Ansicht eines Vakuumisolationselements; und
Fig. 3 eine schematische Schnittansicht einer Hülle.

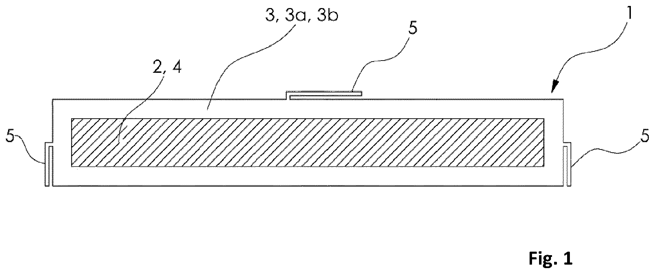

**Fig. 1** zeigt eine Variante für ein Vakuumisolationselements 1. Das gezeigte Vakuumisolationselement 1 ist als Vakuumisolationspaneel mit einer Mittelnaht ausgebildet. Das Vakuumisolationselement 1 umfasst ein Kernmaterial 2, und eine das Kernmaterial 2 vollständig umgebende Hülle 3 aus verschiedenen miteinander verbundenen Abschnitten. Die Hülle 3 umfasst eine Kunststofffolie 3a und eine Edelstahlfolie 3b.

Die Nähte 5 verlaufen an den Seiten auf etwa halber Höhe sowie auf der flachen Seite des Vakuumisolationspaneels.

Das Kernmaterial 2 in der abgebildeten Ausführung umfasst pyrogene Kieselsäure, Glasfasern 4 oder losen Kunststoff.

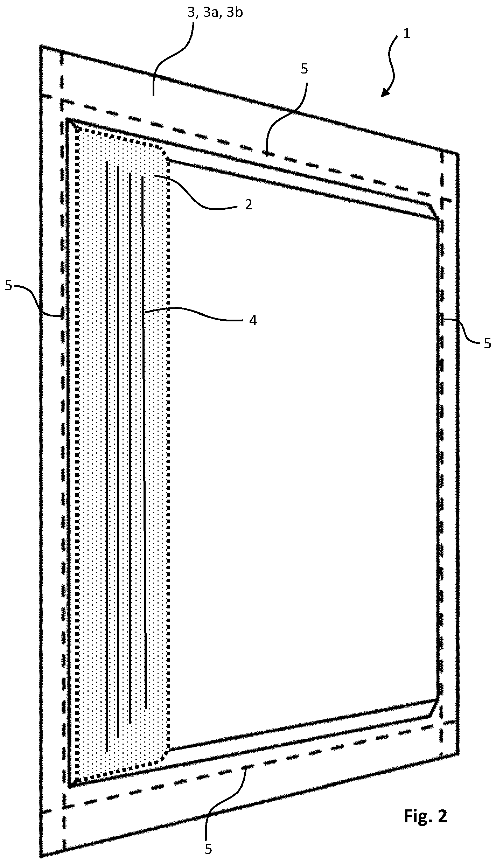

**Fig. 2** zeigt eine schematische Ansicht eines Vakuumisolationselements 1. Das gezeigte Vakuumisolationselement 1 ist als Vakuumisolationspaneel ausgebildet. Das Vakuumisolationselement 1 umfasst ein Kernmaterial 2, und eine das Kernmaterial 2 vollständig umgebende Hülle 3. Die Hülle 3 umfasst eine Kunststofffolie 3a und eine

Edelstahlfolie 3b, welche durch Aufkaschieren miteinander verbunden sind. Dabei weist die Edelstahlfolie 3b eine Dicke von 40 µm auf und die Kunststofffolie 3a weist eine Dicke von 100 µm auf. Hierdurch ist das Vakuumisolationselement 1 nicht zu steif und erlaubt eine flexiblere Handhabung, sowie die Bildung von Faltkanten.

Die Kunststofffolie 3a ist dabei als Hochbarrierelage derart ausgebildet, sodass die Kunststofflage 3a trotz der geringen Dicke eine niedrige Permeationsrate aufweist, die geeignet ist, sodass im Inneren des Vakuumisolationselements ein Druck von < 1 mbar erzeugt und gehalten werden kann.

Der Einsatz einer Kombination aus Kunststofffolie 3a aus einem heißsiegelbaren Material und einer Edelstahlfolie 3b erlaubt die einfache Bildung von Nähten 5 durch thermisches Verschweißen. Gleichzeitig trägt die Kombination aus Kunststofffolie 3a und Edelstahlfolie 3b als Hülle 3 dazu bei, dass das Vakuumisolationselement 1 als Brandschutzisolationselement geeignet ist.

Der Einsatz einer Kombination aus Kunststofffolie 3a und Edelstahlfolie 3b ist vorteilhaft gegenüber einer Metallisierung der Kunststofffolie 3a, da die Edelstahlfolie 3b im Vergleich zu einer metallisierten Kunststofflage weniger empfindlich gegenüber mechanischer Belastung ist.

Das Kernmaterial 2 in der abgebildeten Ausführung umfasst pyrogene Kieselsäure und Glasfasern 4. Durch die Kombination aus Kunststofffolie 3a und Edelstahlfolie 3b als Hülle 3 reduziert sich das Auftreten von Wärmebrücken zwischen der Umgebung des Vakuumisolationselements 1 und dem Kernmaterial 2.

Ein erfindungsgemäßes Vakuumisolationselements 1 der abgebildeten Ausführung erfüllt die Anforderungen nach DIN 4102-1 und EN 13501-1 an eine Brandschutzklasse A2.

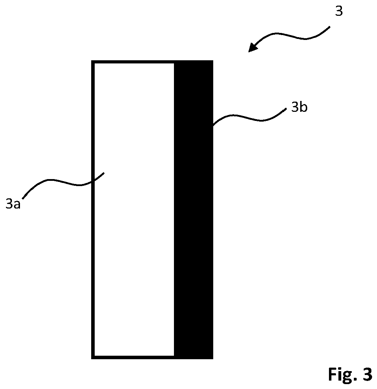

**Fig. 3** zeigt einen Schnitt durch die Hülle 3. Dabei umfasst die Hülle 3 eine Kunststofffolie 3a und eine Edelstahlfolie 3b. Dabei sind eine Kunststofffolie 3a und eine Edelstahlfolie 3b durch Aufkaschieren miteinander verbunden.

## Patentansprüche

1. Vakuumisolationselement (1), geeignet als Brandschutzisolationselement, umfassend ein Kernmaterial (2), und eine das Kernmaterial (2) vollständig umgebende Hülle (3), welche Hülle (3) eine Kunststofflage (3a) und eine an der Kunststofflage (3a) angeordnete Edelstahllage (3b) umfasst.

2. Vakuumisolationselement (1) gemäß Anspruch 1, wobei die Edelstahllage (3b) eine Edelstahlfolie umfasst, und wobei die Edelstahlfolie mit der Kunststofflage (3a) beschichtet ist.

3. Vakuumisolationselement (1) gemäß Anspruch 1, wobei die Edelstahllage (3b) eine Edelstahlfolie umfasst, und wobei die Kunststofflage (3a) eine Kunststofffolie umfasst und wobei die Edelstahlfolie auf die Kunststofffolie mittelbar oder unmittelbar aufkaschiert ist.

4. Vakuumisolationselement (1) gemäß einem der vorangehenden Ansprüche, wobei die Hülle (3) eine Dicke aufweist, die derart ausgebildet ist, sodass die Hülle (3) flexibel ist.

5. Vakuumisolationselement (1) gemäß einem der vorangehenden Ansprüche, wobei die Edelstahllage (3b) eine Dicke in einem Bereich zwischen 20 µm bis 80 µm, insbesondere 30 µm und 40 µm aufweist.

6. Vakuumisolationselement (1) gemäß einem der vorangehenden Ansprüche, wobei die Edelstahllage (3b) eine geringere Dicke als die Kunststofflage (3a) hat.

7. Vakuumisolationselement (1) gemäß einem der vorangehenden Ansprüche, wobei die Kunststofflage (3a) eine Dicke in einem Bereich zwischen 50 µm und 100 µm aufweist.

8. Vakuumisolationselement (1) gemäß einem der vorangehenden Ansprüche, wobei die Kunststofflage (3a) aus einem heißsiegelbaren oder ultraschallschweißbaren Material ist.

9. Vakuumisolationselement (1) gemäß Anspruch 8, wobei die Hülle (3) zumindest eine durch thermisches Verschweißen der Kunststofflage (3a) mit der Edelstahllage (3b) gebildete Naht (5) aufweist.

10. Vakuumisolationselement (1) gemäß einem der vorangehenden Ansprüche, umfassend ein brennbares Kernmaterial (2), und wobei die Hülle (3) derart ausgebildet ist, sodass das Vakuumisolationselement (1) die Minimalanforderungen an die Brandklasse B2 gemäß DIN 4102-1 oder E gemäß 13501-1 aufweist.

11. Vakuumisolationselement (1) gemäß einem der Ansprüche 1 bis 9, umfassend ein nicht-brennbares Kernmaterial (2), und wobei die Hülle (3) derart ausgebildet ist, sodass das Vakuumisolationselement (1) die Minimalanforderungen an die Brandklasse A2 gemäß DIN 4102-1 oder EN 13501-1 aufweist.

12. Vakuumisolationselement (1) gemäß einem der vorangehenden Ansprüche, wobei das Kernmaterial (2) einen festen Kern oder einen pulverförmigen Kern oder einen offenporigen Kern umfasst.

13. Vakuumisolationselement (1) gemäß einem der vorangehenden Ansprüche, wobei das Kernmaterial Glasfasern (4) oder Kunststoff umfasst.
